# EUROPEAN PATENT SPECIFICATION

(11) **EP 0 956 498 B1**
(45) Date of publication and mention of the grant of the patent: **21.03.2007**
(21) Application number: 98901654.8
(22) Date of filing: 23.01.1998
(51) Int. Cl.: G01N 21/94, G01N 21/88

(54) **METHOD AND APPARATUS FOR CHECKING THE CONDITION OF A PROTECTIVE GLASS IN CONNECTION WITH LASER MACHINING**
Verfahren und Vorrichtung zur Prüfung des Zustandes eines Schutzglases bei der Laserbearbeitung
PROCEDE ET APPAREIL PERMETTANT DE VERIFIER L'ETAT D'UN VERRE PROTECTEUR LORS D'UN USINAGE AU LASER

(30) Priority: 24.01.1997 SE 9700196
(43) Date of publication of application: 17.11.1999
(73) Proprietor: Permanova Lasersystem AB, S-831 46 Östersund (SE)
(72) Inventor: ROOS, Sven-Olov, S-443 34 Lerum (SE); TORSTENSSON, Per-Arne, S-434 95 Kungsbacka (SE)
(74) Representative: Olsson, Gunnar
(86) International application number: PCT/SE1998/000105
(87) International publication number: WO 1998/033059

(56) References cited:
- EP-A- 0 249 031
- DE-A- 3 243 372
- DE-A- 3 715 798
- US-A- 4 808 813

## Description

The present invention relates to a method and an apparatus for checking the condition of a protective glass which is arranged between the workpiece and the laser optics in a laser machining system in such a way that the laser beam, or any other substantially coaxial radiation, is arranged to pass through the glass before it is focused on the workpiece.

In order to protect the optical components in a laser machining system, for instance in a laser welding or engraving equipment, it is previously known to use protective glasses. Such protective glasses are then mounted between the laser optics and the object (workpiece) to be machined and prevents dirt and dust produced at the machining from entering into the laser optics.

During the machining process such protective glasses become more and more dirty by particles removed from the workpiece so that the laser beam which passes through the glass is injuriously effected and consequently also the machining process. Some of the incident laser radiation is absorbed and scattered by dirt and dust particles collected on the glass surface. A part of the scattered radiation is collected by the protective glass walls and directed outwards to the peripheral parts of the glass plate. The more dirt and dust particles on the glass surface the more scattering of the incident laser beam.

As the incident laser beam also is the working, machining, beam it should be understood that such absorption and scattering of the beam is unsatisfactory as the power density of the focused beam is reduced. This is a disadvantage especially in a laser welding system as the welding capacity then is reduced. But it is also a disadvantage in for instance a laser engraving system of the type illustrated in the Swedish Patent 9403349-5 in which small complex engraving patterns are made by means of the laser beam. If the beam is unsharp due to the scattering effect, the good quality of the pattern or script produced by the laser beam can not be maintained.

Furthermore, there is a risk that the protective glass is fractured when it becomes too dirty. For these reasons the protective glasses must be exchanged regularly.

Up to now the control of the protective glasses has primarily been done by a visual inspection which, however, is a difficult task as the glasses are often difficult to reach and inspect. It is also necessary to shut off the machining equipment during such an inspection which is of course a disadvantage.

Therefore, there is a need for a more automatic control of a protective glass which control can be performed continuously without interrupting the machining process.

DE-A-3 715 798 discloses the prior art according to the preambles of claims 1 and 3. An optical principle similar to that of the invention is described in US-A-4 808 813.

According to the invention this is achieved by means of a photodetector arranged to sense (detect) the level of radiation spread by dirt and dust particles which has fastened on the protective glass surface.

According to a preferred embodiment of the invention the photodetector is turned towards the edge of the protective glass, i.e. to detect the level of radiation which has reached the edge of the protective glass.

In the following the invention will be described more in detail with reference to the accompanying drawings which illustrate schematically a system for detecting the condition of a protective glass device.
Figure 1 illustrates a typical, conventional arrangement of a protective glass device in a laser machining system,
Figure 2 illustrates an arrangement according to the invention, and
Figure 3 illustrates an alternative arrangement with an optical fiber.

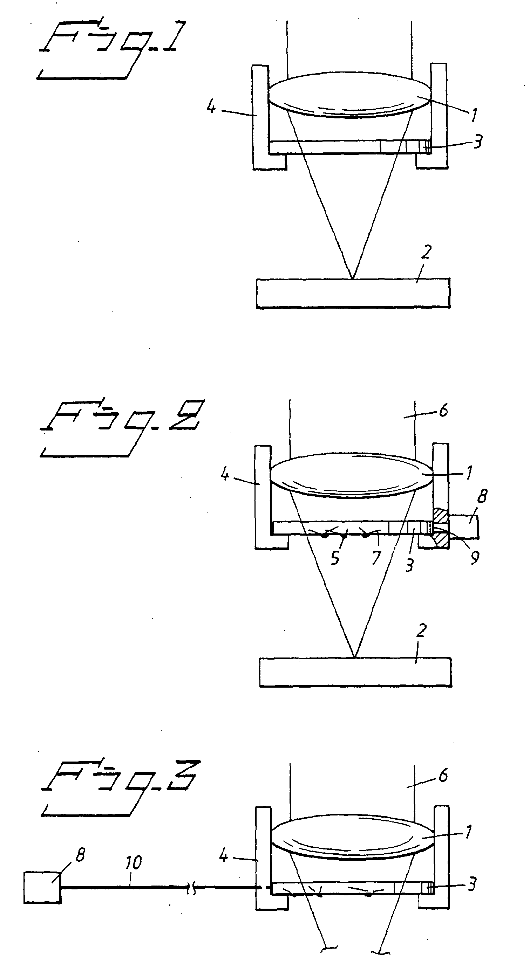

In figure 1 it is illustrated schematically a focusing optical arrangement, symbolised by a lens 1, which concentrates the incident laser radiation on a workpiece 2. It can be a welding system, an engraving system like the one illustrated in SE 9403349-5, a cutting system or any other laser machining system. In all such machining systems dirt and dust particles are produced from the workpiece during the machining process. To prevent such particles from coming into the focusing optics a protective glass 3 is provided between the workpiece 2 and the focusing lens 1. The protective glass is mounted in a holder 4 and has a circular peripheral edge side.

The dirt and dust particles that are produced during the machining process are instead fastened on the protective glass surface 3. This means that the particles can not enter into the more delicate optical system, but the disadvantage with such a system is that the particles are gradually collected on the glass surface and are causing an undesired scattering or deflection of the incident laser radiation. As mentioned in the introductory portion of the specification the protective glasses therefore must be exchanged regularly.

Figure 2 shows an arrangement like the one in figure 1 but including means for checking the condition of the protective glass 3 with respect to dirt and dust particles or any other contamination on the glass surface that are scattering the incident laser radiation 6. In the figure it is also illustrated how some particles 5 fastened on the glass surface generates scattered light 7. This scattered light is partly collected by the walls of the protective glass device and directed towards the outer periphery of the protective glass device, i.e. the edge side 9 in the figure.

A photodetector 8 is positioned with the photosensitive surface turned towards the edge 9 so that scattered light on the edge, which light is an indicia of the dirt layer on the protective glass, is detected. The photodetector detects the amount of radiation scattered by particles on the protective glass surface. When the detector signal has reached a certain level it can be indicated that it is time to exchange the protective glass. The advantage with such a detector control is the fact that the condition of the protective glass can be controlled continuously during the machining process.

By making the edge surface 9 on the protective glass frosted the light scattering caused by particles on the protective glass surface will be substantially independent of the specific location of the particle on the glass surface. This depends on the fact that multiple reflections on the frosted surface make the light intensity from the edge 9 more uniform.

In the alternative embodiment illustrated in figure 3 the scattered light on the edge 9 is collected by an optical fiber 10 which is connected to a photodetector 8 located at some distance from the optical system.

Experiments have indicated that the detector signal has a large volume range. Also a new protective glass has a certain scattered light level, a reference level. When the scattered, detected, light has reached a level which is 100 times the reference level the protective glass can still be used, but it is clearly dirty. When the scattered light has reached a level which is 1000 times the reference level the protective glass is so dirty that it should be exchanged.

Measuring the level of the scattered light as a function of the location of the dirt particles has indicated that for a frosted edge surface the detector signal is substantially independent of the location of the dirt particles, provided that the particles are located within an area of 80% of the diameter of the protective glass.

Instead of using the scattered radiation from the machining laser beam (power laser beam) the scattered radiation from any other substantially coaxial optical radiation source can be used, for instance the radiation from a control measuring laser of the HeNe type or a laser diode. Such a radiation should then have another wavelength than the machining power laser beam and the detector should be provided with an optical filter for detecting radiation of this wavelength only.

One advantage by using such "additional radiation" for the protective glass control is the fact that the measuring then can be made independent of the machining process, i.e. the measuring operation can be performed also when the power laser beam has been shut off and the measuring signal is also independent of any power variations during the machining process.

The invention is not limited to the examples that have been described above but can be varied within the scope of the accompanying claims. Also, the invention can be combined with different methods for preventing dirt to collect on the protective glass surface, for instance cross jet or axial blow methods.

## Claims

1. Method for checking the condition of a protective glass (3) which is arranged between the workpiece and the laser optics in a laser machining system in which the machining laser beam, or possibly any other radiation which is coaxial with the machining laser beam, is arranged to pass through the protective glass **characterised by** arranging a photodetector (8) in connection with the edge (9) of the protective glass (3) for sensing the radiation scattered to this edge by dirt and dust particles which has fastened on the protective glass (3).

2. Method according to claim 1 **characterised by** directing the scattered radiation from the edge of the protective glass (3) to the photodetector (8) via an optical fiber (10).

3. Apparatus for checking the condition of a protective glass (3) arranged between the workpiece and the laser optics in a laser machining system in which the laser beam, or possibly any other radiation coaxial with the machining laser beam, is arranged to pass through the protective glass **characterised by** a photodetector (8) for sensing the radiation scattered by dirt and dust particles (5) fastened on the protective glass (3) and which has reached the edge (9) of the protective glass.

4. Apparatus according to claim 3 **characterised in that** the edge surface (9) of the protective glass is frosted for providing a uniform light intensity from the edge.

5. Apparatus according to claim 3 **characterised by** an optical fiber (10) arranged to transmit the scattered radiation from the edge of the protective glass (3) to the photodetector (8).

6. Apparatus according to claim 5 **characterised in that** the edge surface (9) of the protective glass is frosted for providing a uniform light intensity before the radiation is transmitted to the photodetector (8) by means of said optical fiber (10).

7. Apparatus according to claim 3 **characterised in that** the photodetector (8) is arranged to indicate when the detector signal has reached a certain level.

8. Apparatus according to any of the claims 3-7 **characterised in that** the photodetector (8) comprises a filter for detecting only scattered radiation from a radiation substantially coaxial with the machining laser beam but with a different wavelength.

## Patentansprüche

1. Verfahren zum Prüfen des Zustandes eines Schutzglases (3), welches zwischen dem Werkstück und der Laseroptik in einem Laser-Bearbeitungssystem angeordnet ist, in welchem der Bearbeitungslaserstrahl, oder gegebenenfalls andere Strahlung, die zu dem Bearbeitungslaserstrahl koaxial ist, durch das Schutzglas hindurchtritt, **dadurch gekennzeichnet, dass** man in Verbindung mit dem Rand (9) des Schutzglases (3) einen Fotodetektor (8) anordnet zum Erfassen der Strahlung, die von Schmutz- und Staubteilchen, die sich auf dem Schutzglas (3) festgesetzt haben, zu diesem Rand hin gestreut wird.

2. Verfahren nach Anspruch 1, **dadurch gekennzeichnet, dass** die gestreute Strahlung vom Rand des Schutzglases (3) über eine optische Faser (10) zu dem Fotodetektor (8) gerichtet wird.

3. Vorrichtung zum Prüfung des Zustands eines Schutzglases (3), das zwischen dem Werkstück und der Laseroptik in einem Laserbearbeitungssystem angeordnet ist, in welchem der Laserstrahl, oder gegebenenfalls andere Strahlung, die koaxial zu dem Bearbeitungslaserstrahl ist, durch das Schutzglas hindurchtritt, **gekennzeichnet durch** einen Fotodetektor (8) zum Erfassen der Strahlung, die von Schmutz- und Staubteilchen (5), die sich auf dem Schutzglas (3) festgesetzt haben, gestreut wird und den Rand (9) des Schutzglases erreicht hat.

4. Vorrichtung nach Anspruch 3, **dadurch gekennzeichnet, dass** die Randoberfläche (9) des Schutzglases mattiert ist, um eine gleichförmige Lichtintensität von dem Rand zu liefern.

5. Vorrichtung nach Anspruch 3, **gekennzeichnet durch** eine optische Faser (10), die so angeordnet ist, dass sie die gestreute Strahlung von dem Rand des Schutzglases (3) zu dem Fotodetektor (8) überträgt.

6. Vorrichtung nach Anspruch 5, **dadurch gekennzeichnet, dass** die Randfläche (9) des Schutzglases mattiert ist, um gleichförmige Lichtintensität zu liefern, bevor die Strahlung mittels der optischen Faser (10) zu dem Fotodetektor (8) übertragen wird.

7. Vorrichtung nach Anspruch 3, **dadurch gekennzeichnet, dass** der Fotodetektor (8) so eingerichtet ist, dass er anzeigt, wenn das detektierte Signal einen bestimmten Pegel erreicht hat.

8. Vorrichtung nach einem der Ansprüche 3 bis 7, **dadurch gekennzeichnet, dass** der Fotodetektor (8) ein Filter aufweist, um nur Streustrahlung von einer Strahlung, die im Wesentlichen koaxial zu dem Bearbeitungslaserstrahl ist, aber eine unterschiedliche Wellenlänge aufweist, zu erfassen.

## Revendications

1. Procédé permettant de vérifier l'état d'un verre protecteur (3) qui est agencé entre la pièce et l'optique laser dans un système d'usinage laser dans lequel le faisceau laser d'usinage, ou éventuellement tout autre rayonnement qui est coaxial par rapport au faisceau laser d'usinage, est agencé de manière à passer au travers du verre protecteur, **caractérisé en ce qu'**on agence un photodétecteur (8) associé au bord (9) du verre protecteur (3) afin de détecter le rayonnement diffusé vers ce bord par des particules d'impuretés et de poussière qui se sont fixées sur le verre protecteur (3).

2. Procédé selon la revendication 1, **caractérisé en ce qu'**on dirige le rayonnement diffusé du bord du verre protecteur (3) jusqu'au photodétecteur (8) par l'intermédiaire d'une fibre optique (10).

3. Appareil permettant de vérifier l'état d'un verre protecteur (3) agencé entre la pièce et l'optique laser dans un système d'usinage laser dans lequel le faisceau laser, ou éventuellement tout autre rayonnement coaxial par rapport au faisceau laser d'usinage, est agencé de manière à passer au travers du verre protecteur, **caractérisé par** un photodétecteur (8) permettant de détecter le rayonnement diffusé par les particules d'impuretés et de poussière (5) fixées sur le verre protecteur (3) et qui a atteint le bord (9) du verre protecteur (3).

4. Appareil selon la revendication 3, **caractérisé en ce que** la surface de bord (9) du verre protecteur est givrée afin d'obtenir une intensité lumineuse uniforme à partir du bord.

5. Appareil selon la revendication 3, **caractérisé par** une fibre optique (10) agencée afin de transmettre le rayonnement diffusé du bord du verre protecteur (3) jusqu'au photodétecteur (8).

6. Appareil selon la revendication 5, **caractérisé en ce que** la surface de bord (9) du verre protecteur est givrée afin d'obtenir une intensité lumineuse uniforme avant que le rayonnement ne soit transmis au photodétecteur (8) à l'aide de ladite fibre optique (10).

7. Appareil selon la revendication 3, **caractérisé en ce que** le photodétecteur (8) est agencé de manière à indiquer le moment où le signal du détecteur a atteint un certain niveau.

8. Appareil selon l'une quelconque des revendications 3 à 7, **caractérisé en ce que** le photodétecteur (8) comprend un filtre permettant de détecter uniquement le rayonnement diffusé à partir d'un rayonnement sensiblement coaxial par rapport au faisceau laser d'usinage mais ayant une longueur d'onde différente.
